# EUROPÄISCHE PATENTANMELDUNG

(11) **EP 1 511 139 A2**
(43) Veröffentlichungstag der Anmeldung: **02.03.2005**
(21) Anmeldenummer: 04020006.5
(22) Anmeldetag: 24.08.2004
(51) Int. Cl.: H02G 1/08, H02G 11/00

(54) **Verfahren und Vorrichtung zum Befetten eines Schlauchpakets**

(30) Priorität: 30.08.2003 DE 10340100
(71) Anmelder: KUKA Roboter GmbH, 86165 Augsburg (DE)
(72) Erfinder: Karlinger, Stefan, 86199 Augsburg (DE)
(74) Vertreter: Lempert, Jost, Dipl.-Phys. Dr. rer.nat.

(57) **Zusammenfassung**

Die Erfindung schlägt ein Verfahren zum Befetten eines Schlauchpakets aus einem Schutzschlauch und durch diesen geführten Leitungen, insbesondere als Energiezuführung vor, bei dem zumindest ein Fettschlauch über die gesamte Länge des Schutzschlauches zwischen den Leitungen bewegt wird und während der Bewegung durch mindestens einen Auslass das Fett aus dem Fettschlauch in den Schutzschlauch eingedrückt wird. Eine erfindungsgemäße Vorrichtung ist ausgebildet durch diesen geführten Leitungen, insbesondere als Energiezuführung, gekennzeichnet durch mindestens einen mit mindestens einem Auslass versehenen Fettschlauch.

## Beschreibung

Die Erfindung betrifft ein Verfahren und eine Vorrichtung zum Befetten eines Schlauchpakets aus einem Schutzschlauch und durch diesen geführten Leitungen, insbesondere als Energiezuführung.

Um die Reibung von durch einen Schutzschlauch im Rahmen eines Schlauchpakets hindurchgeführten Leitungen, wie Kabeln, Schläuchen für Arbeitsmittel im Rahmen insbesondere der Energiezuführung einer Maschine, wie eines Roboters, sowohl zwischen den Leitungen und dem Schutzschlauch als auch zwischen Leitungen untereinander zu reduzieren, erfolgt eine Fettung des Schlauchpakets. Hierzu werden die Leitungen außerhalb des Schutzschlauches in der Regel manuell eingefettet und erst dann in den Schutzschlauch eingeschoben. Die Enden der einzuschiebenden Leitungen müssen beim Einfetten und vor dem Einschieben in den Schutzschlauch abgedeckt werden, damit kein Fett in diese eindringen kann, insbesondere in Leitungen für Arbeitsmittel. Beim Einschieben der Leitungen in den Schutzschlauch wird das aufgebrachte Fett teilweise wieder abgestreift, was wiederum zu einer ungleichmäßigen Verteilung des Fettes im Schutzschlauch führt. Wenn zu wenig Fett aufgebracht wird, so ist ein Nachfetten des Schlauchpakets erforderlich. Dies ist nur möglich, indem die Leitungen wieder aus dem Schutzschlauch entfernt werden und außerhalb desselben nachgefettet werden. Dies ist extrem aufwendig, da die Leitungen mit Stekkern versehen sind, die vor dem Entfernen aus dem Schutzschlauch zunächst wieder entfernt werden müssen. Ein Nachfetten der Schlauchpakete im eingebauten Zustand am Roboter selbst ist überhaupt nicht möglich.

Der Erfindung liegt daher die Aufgabe zugrunde unter Vermeidung der vorgenannten Nachteile ein Verfahren und eine Vorrichtung zu schaffen, die ein Fetten des Schlauchpakets im zusammengebauten und insbesondere auch im an einer Maschine, wie einem Roboter, eingebauten Zustande ermöglicht.

Erfindungsgemäß wird die genannte Aufgabe mit einem Verfahren der eingangs genannten Art gelöst, welche dadurch gekennzeichnet ist, dass zumindest ein Fettschlauch über die gesamte Länge des Schutzschlauches zwischen den Leitungen bewegt wird und während der Bewegung durch mindestens einen Auslass das Fett aus dem Fettschlauch in den Schutzschlauch eingedrückt wird.

Zur Lösung der erfindungsgemäßen Aufgabe ist weiterhin eine gattungsgemäße Vorrichtung gekennzeichnet durch mindestens einen mit mindestens einem Auslass versehenen Fettschlauch.

Durch das erfindungsgemäße Verfahren und die erfindungsgemäße Vorrichtung wird es möglich, eine Befettung bei in den Schutzschlauch eingebrachten Leitungen vorzunehmen, insbesondere auch wenn das hierdurch gebildete Schlauchpaket an einer Maschine, wie einem Roboter, fest installiert ist. Damit wären die genannten Nachteile insbesondere eines Abstreifens vom Fett beim Einführen befetteter Schläuche verhindert. Ein Fetten des Schlauchpakets im eingebauten Zustand wird erstmals hierdurch ermöglicht.

In bevorzugter Weiterbildung ist vorgesehen, dass das Fett nach Hindurchschieben des Fettschlauches durch den gesamten Schutzschlauch während des Zurückziehens des Fettschlauches durch den Schutzschlauch aus dem Fettschlauch ausgedrückt wird.

Weitere bevorzugte Ausgestaltungen der Erfindung sehen vor, dass der Fettschlauch beim Hindurchbewegen durch den Schutzschlauch im wesentlichen in einer festen Radialposition relativ zu den Leitungen gehalten wird bzw. dass der Fettschlauch unter Zwischengreifen von Radialansätzen eines mit ihm verbundenen Sterns durch den Schutzschlauch bewegt wird. Hierzu ist vorrichtungsmäßig vorgesehen, dass der Fettschlauch mit einem Stern mit radialen Rippen versehen ist, wobei der Stern vorzugsweise zwischen Schlauchkörper und einem Auslasskörper des Fettschlauches drehbar angeordnet ist.

In weiterer bevorzugter Ausgestaltung sieht das erfindungsgemäße Verfahren vor, dass der Fettschlauch mit einem um ihn frei drehbaren Stern durch den Schutzschlauch bewegt wird, wobei insbesondere während des Hindurchbewegens des Fettschlauches durch den Schutzschlauch Fett durch radial gerichtete Auslässe aus dem Fettschlauch in den Schutzschlauch gedrückt wird und der Fettschlauch durch eine Vorschubeinrichtung durch den Schutzschlauch bewegt wird.

Eine Weiterbildung des erfindungsgemäßen Verfahrens zeichnet sich dadurch aus, dass das Fett aus dem Fettschlauch mittels eines Pumpvorganges herausgedrückt wird, wobei entweder das Fett manuell gepumpt wird oder aber das Fett elektrisch pneumatisch gefördert wird.

Ebenfalls alternative bevorzugte Ausgestaltungen des erfindungsgemäßen Verfahrens sehen vor, dass der Fettschlauch manuell durch den Schutzschlauch bewegt wird oder aber der Fettschlauch automatisch durch den Schutzschlauch bewegt wird.

Vorrichtungsmäßige Weiterbildung zeichnet sich dadurch aus, dass der Fettschlauch einen Düsenkörper mit radial gerichteten Auslässen, vorzugsweise in Form von Düsen, aufweist und/oder durch eine Vorschubeinrichtung. Eine bevorzugte Weiterbildung ist gekennzeichnet durch eine Pumpeinrichtung.

Weitere Vorteile und Merkmale der Erfindung ergeben sich aus den Ansprüchen, aus der nachfolgenden Beschreibung, in der ein Ausführungsbeispiel der Erfindung unter Bezugnahme auf die Zeichnungen im einzelnen erläutert ist. Dabei zeigt:

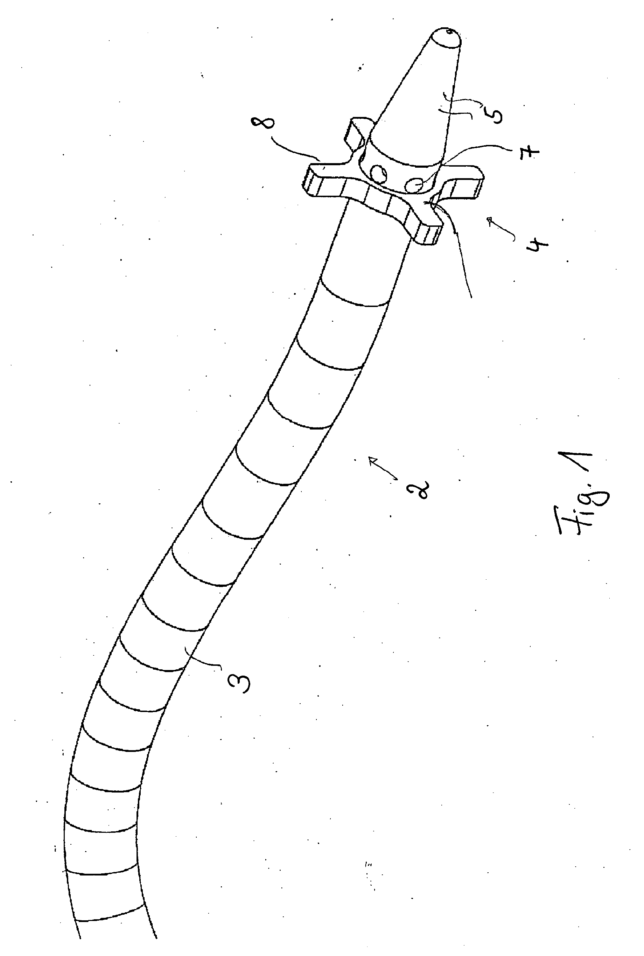

- Fig. 1: eine bevorzugte Ausführungsform des erfindungsgemäßen Fettschlauches mit Führungsstern und Auslasskörper;

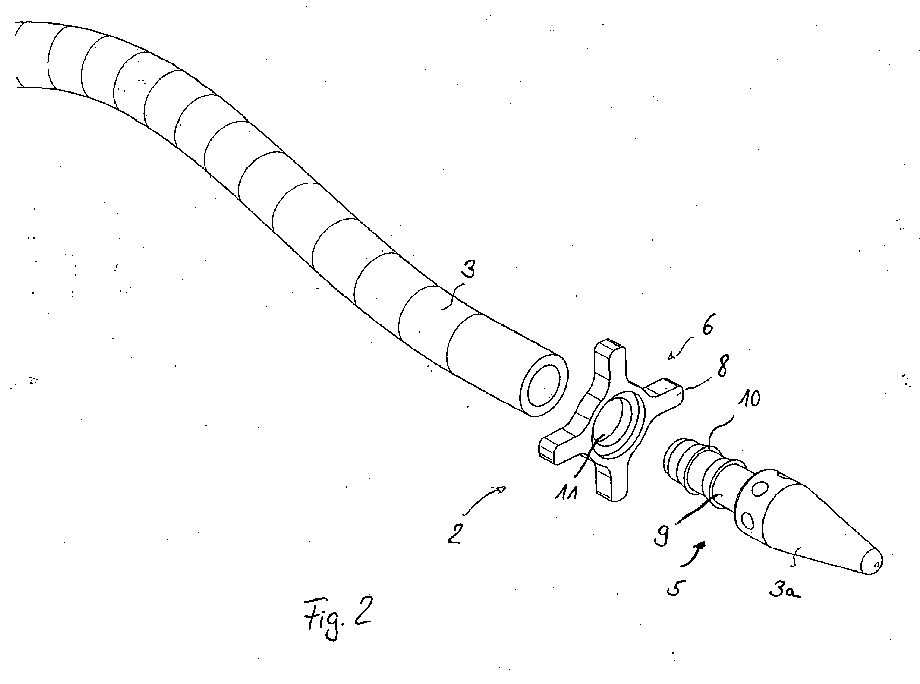

- Fig. 2: den Fettschlauch der Fig. 1 vor Zusammenbau;
- Fig. 3: eine schematische Gesamtdarstellung der erfindungsgemäßen Vorrichtung zum Befetten;
- Fig. 4a: eine schematische Darstellung der Durchführung des Fettschlauches durch einen Leitungen aufweisenden Führungsschlauch in Seitenansicht und
- Fig. 4b: einen Querschnitt durch den Gegenstand der Fig. 4a.

Die erfindungsgemäße Vorrichtung 1 weist einen Fettschlauch 2 auf, der aus einem herkömmlichen Schlauchkörper 3, einer am vorderen Ende 4 desselben in diesen eingesteckten Auslasskörper 5 und einem Zwischenschlauchkörper 3 und Auslasskörper 5 angeordneten Führungsstern 6 besteht. Der Auslasskörper 5 weist unmittelbar vor dem Führungsstern 6 an ihrem Umfang radial gerichtete Auslässe 7, insbesondere in Form von Düsen, auf, durch die das Fett aus dem Fettschlauch 2 herausgedrückt werden kann. Der Führungsstern 6 weist radial gerichtete Stern-Rippen 8 auf. Der Führungsstern 6 sitzt vorzugsweise frei drehbar zwischen Schlauchkörper 3 und Düsenkörper 5.

Der Auslasskörper 5 weist einen an einem Auslasskopf 5a anschließenden rückwärtigen Einsteckansatz 9 auf, der mit zu den Auslässen 7 ansteigend ausgebildeten Ringrippen 10 versehen ist. Zum Zusammenbau des Fettschlauches wird zunächst der Stern, der eine den Durchmesser der Ringrippen 10 überragende Durchbruch 11 aufweist über den Ansatz 9 und die Rippen 10 bis zum Auslasskopf 5a hin geschoben. Anschließend wird der Schlauchkörper 3 über den Ansatz 9 und die Rippen 10 geschoben und durch diese kraft- und formschlüssig am Auslasskörper 5 derart gehalten, dass der Stern sich drehen kann.

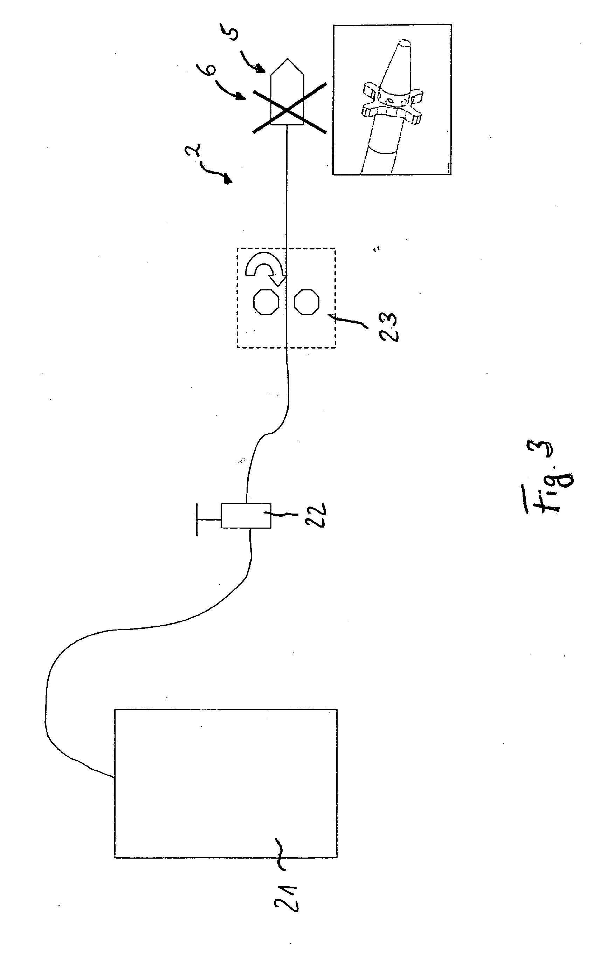

Die Fig. 3 zeigt die gesamte erfindungsgemäße Vorrichtung in schematischer Darstellung. Die erfindungsgemäße Vorrichtung 1 weist neben dem hier schematisch dargestellten Fettschlauch 2 mit dem Auslasskörper 5 einen Fettvorrat 21, eine Pumpe 22 und eine Vorschubeinrichtung 23 für den Schlauchkörper 3 auf.

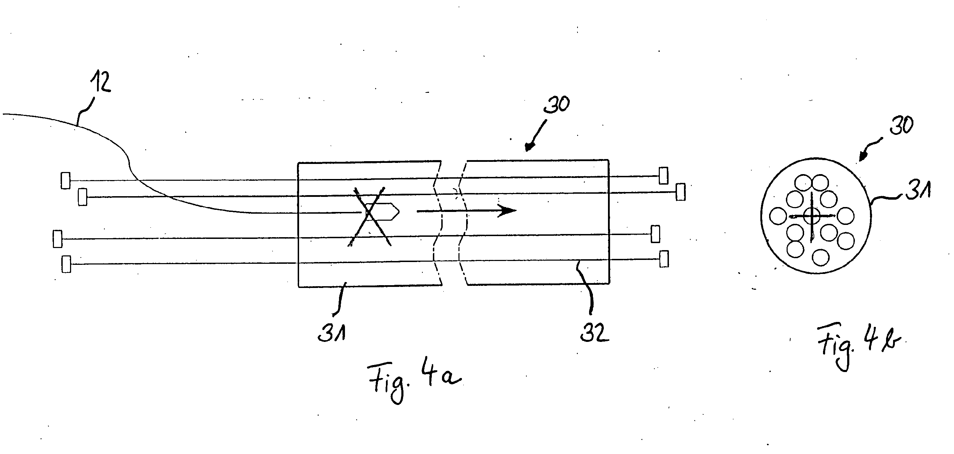

Die Fig. 4a und 4b zeigen den Einsatz der erfindungsgemäßen Vorrichtung 1 in einer Energiezuführung 30, die aus einem Schutzschlauch 31 und durch diesen hindurchgeführten Leitungen 32 besteht.

Der Einsatz der erfindungsgemäßen Vorrichtung zur Befettung geschieht folgendermaßen:

Die fertig konfektionierte Energiezuführung 30 in Form eines aus dem Schutzschlauch 31 und durch diesen hindurchgeführten Leitungen 32 bestehenden Schlauchpakets wird möglichst gestreckt und geradeaus gelegt bzw. bei einem Nachfetten der schon an einem Roboter angebrachten Energiezuführung wird der Roboter in eine Stellung gebracht, in der das Schlauchpaket möglichst wenig gebogen, sondern vielmehr möglichst gerade verläuft. Der Auslasskörper 5 mit dem Stern 6 wird an einem Ende des Führungsschlauchs 31 möglichst in der Mitte der Leitungen platziert und der Fettschlauch 2 mit dem Auslasskörper 5 wird dann in einen Schutzschlauch 31 Energiezuführung bei der dargestellten Ausführungsform durch die Vorschubeinrichtung 23 eingeschoben. Die Vorschubeinrichtung 23 kann wie dargestellt, zwei Walzen 32 aufweisen, die gegenläufig umlaufen und zwischen sich den Schlauchkörper 3 kraftschlüssig entsprechend ihrer Umlaufrichtung vorschieben.

Während grundsätzlich ein Befetten beim Einschieben des Schlauchs in und durch die der Schutzschlauch 31 geschehen kann, wird vorzugsweise der Fettschlauch 2 mit dem Auslasskörper 5 zunächst bis zu dem dem Einschubende abgewandten Ende des Schutzschlauchs 31 eingeschoben und dann beim Zurückziehen des Fettschlauchs 2 (die Vorschubrichtung der Vorschubeinrichtung 23 wird umgekehrt) wird durch Einschalten der Pumpe 22 Fett durch die Auslässe 7 des Auslasskörpers 5 entsprechend mit einer gewünschten Austrittsrate ausgedrückt.

Anschließend wird der Auslasskörper 5 aus dem Schutzschlauch 31 wieder herausgenommen. Vorzugsweise wird das Schlauchpaket am Schutzschlauch 31 und Leitungen 32 dann einige Male in mehreren Richtungen hin und her gebogen, um das Fett innerhalb des Schutzschlauches 31 und um die Leitungen 32 besser zu verteilen. Soweit das Schutzschlauchpaket 31, 32 am Roboter befestigt ist, können dessen Teile langsam relativ zueinander bewegt werden, um diesen Verteilungseffekt für das Fett zu bewirken.

### Bezugszeichenliste

- 1: Vorrichtung
- 2: Fettschlauch
- 3: zwischenschlauchkörper
- 4: Ende
- 5: Auslasskörper
- 5a: Auslasskopf
- 6: Führungsstern
- 7: Auslässe
- 8: Stern-Rippen
- 9: Einsteckansatz
- 10: Rippen
- 11: Öffnung
- 21: Fettvorrat
- 22: Pumpe
- 23: Vorschubeinrichtung
- 30: Energiezuführung
- 31: Schutzschlauch
- 32: Leitungen

## Patentansprüche

1. Verfahren zum Befetten eines Schlauchpakets aus einem Schutzschlauch und durch diesen geführten Leitungen, insbesondere als Energiezuführung, **dadurch gekennzeichnet, dass** zumindest ein Fettschlauch über die gesamte Länge des Schutzschlauches zwischen den Leitungen bewegt wird und während der Bewegung durch mindestens einen Auslass das Fett aus dem Fettschlauch in den Schutzschlauch eingedrückt wird.

2. Verfahren nach Anspruch 1, **dadurch gekennzeichnet, dass** das Fett nach Hindurchschieben des Fettschlauches durch den gesamten Schutzschlauch während des Zurückziehens des Fettschlauches durch den Schutzschlauch aus dem Fettschlauch ausgedrückt wird.

3. Verfahren nach Anspruch 1 oder 2, **dadurch gekennzeichnet, dass** der Fettschlauch beim Hindurchbewegen durch den Schutzschlauch im wesentlichen in einer festen Radialposition relativ zu den Leitungen gehalten wird.

4. Verfahren nach einem der Ansprüche 1 bis 3, **dadurch gekennzeichnet, dass** der Fettschlauch unter Zwischengreifen von Radialansätzen eines mit ihm verbundenen Sterns durch den Schutzschlauch bewegt wird.

5. Verfahren nach Anspruch 4, **dadurch gekennzeichnet, dass** der Fettschlauch mit einem um ihn frei drehbaren Stern durch den Schutzschlauch bewegt wird.

6. Verfahren nach einem der vorangehenden Ansprüche, **dadurch gekennzeichnet, dass** während des Hindurchbewegens des Fettschlauches durch den Schutzschlauch Fett durch radial gerichtete Auslässe aus dem Fettschlauch in den Schutzschlauch gedrückt wird.

7. Verfahren nach einem der Ansprüche 1 bis 6, **dadurch gekennzeichnet, dass** der Fettschlauch automatisch durch den Schutzschlauch bewegt wird.

8. Verfahren nach einem der vorangehenden Ansprüche, **dadurch gekennzeichnet, dass** der Fettschlauch mittels einer Vorschubeinrichtung durch den Schutzschlauch bewegt wird.

9. Verfahren nach einem der vorangehenden Ansprüche, **dadurch gekennzeichnet, dass** der Fettschlauch manuell durch den Schutzschlauch bewegt wird.

10. Verfahren nach einem der Ansprüche 1 bis 6, **dadurch gekennzeichnet, dass** das Fett aus dem Fettschlauch mittels eines Pumpvorganges herausgedrückt wird.

11. Verfahren nach Anspruch 10, **dadurch gekennzeichnet, dass** das Fett manuell gepumpt wird.

12. Verfahren nach Anspruch 10, **dadurch gekennzeichnet, dass** das Fett elektrisch gepumpt wird.

13. Vorrichtung zum Befetten eines Schlauchpakets aus einem Schutzschlauch und durch diesen geführten Leitungen, insbesondere als Energiezuführung, **gekennzeichnet durch** mindestens einen mit mindestens einem Auslass (7) versehenen Fettschlauch (2).

14. Vorrichtung nach Anspruch 13, **dadurch gekennzeichnet, dass** der Fettschlauch (2) mit einem Führungsstern (6) mit radialen Rippen versehen ist.

15. Vorrichtung nach Anspruch 14, **dadurch gekennzeichnet, dass** der Führungsstern (6) zwischen einem Schlauchkörper (3) und einem Auslasskörper (5) angeordnet ist.

16. Vorrichtung nach Anspruch 14 oder 15, **dadurch gekennzeichnet, dass** der Führungsstern (6) drehbar ist.

17. Vorrichtung nach einem der Ansprüche 13 bis 16, **dadurch gekennzeichnet, dass** der Fettschlauch (2) einen Auslasskörper (5) mit radial gerichteten Auslässen (7) aufweist.

18. Vorrichtung nach einem der Ansprüche 13 bis 17, **gekennzeichnet durch** eine Vorschubeinrichtung (23).

19. Vorrichtung nach einem der Ansprüche 13 bis 18, **gekennzeichnet durch** eine Pumpeinrichtung (22).

20. Vorrichtung nach einem der Ansprüche 13 bis 19, **gekennzeichnet durch** einen Fettvorrat (21).
